# EUROPÄISCHE PATENTANMELDUNG

(11) **EP 2 251 575 A2**
(43) Veröffentlichungstag der Anmeldung: **17.11.2010**
(21) Anmeldenummer: 10159881.1
(22) Anmeldetag: 14.04.2010
(51) Int. Cl.: F16K 11/074, F16K 39/04

(54) **Ventil zur Steuerung eines Durchflusses**

(30) Priorität: 11.05.2009 DE 102009003004
(71) Anmelder: Robert Bosch GmbH, 70469 Stuttgart (DE)
(72) Erfinder: Reeb, Georg, 77815, Buehl Eisental (DE); Muschelknautz, Claudius, 77815, Buehl (DE)

(57) **Zusammenfassung**

Ein Ventil (100) zur Steuerung eines Durchflusses eines Mediums in einem Heiz- und/oder Kühlsystem eines Kraftfahrzeugs umfasst ein Ventilgehäuse (110), das mindestens einen ersten (140) und einen zweiten (150) Kanal aufweist und eine an einer drehbar gelagerten Antriebswelle (180) angeordnete Regelscheibe (170). Dabei weist das Ventilgehäuse eine Axialöffnung auf. Die Antriebswelle (180) ist in der Axialöffnung (114) angeordnet. Die Regelscheibe (170) ist dazu vorgesehen, eine Verbindung zwischen dem ersten Kanal und dem zweiten Kanal zu öffnen und zu schließen. In der Axialöffnung ist ein Verschlussstopfen (220) angeordnet, der als Widerlager für eine Stirnseite der Antriebswelle (180) dient. Der Verschlussstopfen (220) ist als Schraubstopfen ausgebildet und weist auf einer Außenseite ein Gewinde auf.

## Beschreibung

Die Erfindung betrifft ein Ventil zur Steuerung eines Durchflusses eines Mediums in einem Heiz- und/oder Kühlsystem eines Kraftfahrzeugs gemäß Patentanspruch 1 sowie ein Verfahren zum Montieren eines Ventils gemäß Patentanspruch 8.

### Stand der Technik

Ein Kühl- bzw. Heizsystem eines Kraftfahrzeugs beinhaltet in der Regel eine zu kühlende Wärmequelle, beispielsweise einen Fahrzeugmotor, die mittels eines Kühlmediums durch freie oder erzwungene Konvektion gekühlt werden soll. Die Heiz- bzw. Kühlleistung ist dabei von der Größe des Kühlmittelflusses abhängig.

Die durch das Kühlmittel von der Wärmequelle abgeführte Wärme kann gleichzeitig zur Beheizung eines Fahrgastraumes genutzt werden. Hierzu weisen Heiz- und Kühlkreisläufe moderner Kraftfahrzeuge in der Regel verschiedene Teilkreisläufe, beispielsweise einen Kühlerzweig, einen Bypass-Zweig und/oder einen Heizungswärmetauscherzweig auf. Die Verteilung des Kühlmittelsstroms auf die unterschiedlichen Zweige des Kühl- und Heizkreislaufes wird dabei über mindestens ein Ventil gesteuert. Ein solches Ventil ist beispielsweise aus der DE 10 2006 053 307 A1 bekannt. Beim dort beschriebenen Ventil führt eine einseitige Druckbeaufschlagung dazu, dass hydraulische Kräfte zu einer axialen Verschiebung des Ventilkörpers in Richtung eines Getriebedeckels führen, wodurch sich das Reibmoment erhöht. Dies führt dazu, dass eine Bewegung des Ventilkörpers erschwert wird. Die Verschiebung des Ventilkörpers wird durch den Getriebedeckel nicht gehemmt.

### Offenbarung der Erfindung

Aufgabe der vorliegenden Erfindung ist es, ein verbessertes Ventil zur Steuerung eines Durchflusses eines Mediums in einem Heiz- und/oder Kühlsystem eines Kraftfahrzeugs bereitzustellen. Diese Aufgabe wird durch ein Ventil mit den Merkmalen des Anspruchs 1 gelöst. Weiter ist es Aufgabe der vorliegenden Erfindung, ein verbessertes Verfahren zum Montieren eines Ventils anzugeben. Diese Aufgabe wird durch ein Verfahren mit den Merkmalen des Anspruchs 8 gelöst. Bevorzugte Weiterbildungen sind in den abhängigen Ansprüchen angegeben.

Ein erfindungsgemäßes Ventil zur Steuerung eines Durchflusses eines Mediums in einem Heiz- und/oder Kühlsystem eines Kraftfahrzeugs umfasst ein Ventilgehäuse, das mindestens einen ersten Kanal und einen zweiten Kanal aufweist, sowie eine an einer drehbar gelagerten Antriebswelle angeordnete Regelscheibe. Dabei weist das Ventilgehäuse eine Axialöffnung auf und die Antriebswelle ist in der Axialöffnung angeordnet. Die Regelscheibe ist dazu vorgesehen, eine Verbindung zwischen dem ersten Kanal und dem zweiten Kanal zu öffnen und zu schließen. Dabei ist in der Axialöffnung ein Verschlussstopfen angeordnet, der als Widerlager für eine Stirnseite der Antriebswelle dient.

Vorteilhafterweise gestattet dieses Ventil eine Einstellung eines Axialspiels von Antriebswelle und Regelscheibe. Dabei kann das Axialspiel unabhängig von Fertigungstoleranzen der im Ventil verbauten Komponenten auf einen gewünschten Wert eingestellt werden. Dadurch wird verhindert, dass hydraulische Kräfte zu einer axialen Verschiebung der Regelscheibe führen, wodurch sich das Reibmoment erhöhen würde. Dadurch reduziert sich der Verschleiß. Außerdem muss ein die Regelscheibe antreibender Antriebsmechanismus weniger leistungsfähig ausgelegt werden.

Gemäß einer Ausführungsform ist der Verschlussstopfen als Schraubstopfen ausgebildet und weist auf einer Außenseite ein Gewinde auf. Dies erlaubt vorteilhafterweise eine besonders einfache Einstellung des Axialspiels.

Bevorzugt weist der Verschlussstopfen auf einer Außenseite eine umlaufende Nut auf, in der ein Dichtring angeordnet ist. Vorteilhafterweise gestattet dies eine dichte Ausführung des Ventils.

Ebenfalls bevorzugt ist der Verschlussstopfen im Ventilgehäuse gegen ein Verdrehen gesichert. Dies stellt in vorteilhafter Weise sicher, dass das gewünschte Axialspiel von Antriebswelle und Regelscheibe über die Lebensdauer des Ventils beibehalten bleibt.

Gemäß einer anderen Ausführungsform ist der Verschlussstopfen als Pressstopfen ausgebildet. Dies erfordert ein Ausmessen der axialen Lage der Antriebswelle und ein massgenaues Einpressen des Pressstopfens. Vorteilhafterweise ist die Ausführung besonders kostengünstig und verschleissarm.

Gemäß einer Weiterbildung des Ventils weist der Verschlussstopfen eine stirnseitige Vertiefung auf, in der eine Anlaufscheibe angeordnet ist. Vorteilhafterweise reduziert dies eine zwischen dem Verschlussstopfen und der Antriebswelle auftretende Reibung.

In einer zusätzlichen Weiterbildung des Ventils weist eine der Antriebswelle zugewandte Oberfläche der Anlaufscheibe eine kuppelförmige Anlaufkuppe auf. Vorteilhafterweise reduziert dies die zwischen Antriebswelle und Verschlussstopfen auftretende Reibung zusätzlich.

Eine zusätzliche Weiterbildung des Ventils sieht vor, dass eine dem Verschlussstopfen zugewandte Stirnseite der Antriebswelle eine kuppelförmige Anlaufkuppe aufweist. Auch diese Weiterbildung bietet den Vorteil, die zwischen Antriebswelle und Verschlussstopfen auftretende Reibung zu reduzieren.

Zweckmäßigerweise ist in der Axialöffnung des Ventils eine Lagerbuchse angeordnet und die Antriebswelle durch die Lagerbuchse geführt.

Ein erfindungsgemäßes Verfahren zum Montieren eines Ventils zum Steuern eines Durchflusses eines Mediums in einem Heiz- und oder Kühlsystem eines Kraftfahrzeugs eignet sich für ein Ventil mit einem Ventilgehäuse, das mindestens einen ersten Kanal und einen zweiten Kanal aufweist und eine an einer drehbar gelagerten Antriebswelle angeordnete Regelscheibe umfasst. Dabei weist das Ventilgehäuse eine Axialöffnung auf. Die Antriebswelle ist in der Axialöffnung angeordnet. Die Regelscheibe ist dazu vorgesehen, eine Verbindung zwischen dem ersten Kanal und dem zweiten Kanal zu öffnen und zu schließen. Das Verfahren umfasst Schritte zum Einschrauben eines als Schraubstopfen ausgebildeten Verschlussstopfens in die Axialöffnung bis zu einem Anschlag des Verschlussstopfens an der Antriebswelle, und zum Herausschrauben des Verschlussstopfens aus der Axialöffnung um einen festgelegten Drehwinkel.

Dieses Verfahren bietet den Vorteil, dass ein Axialspiel von Antriebswelle und Regelscheibe unabhängig von Fertigungstoleranzen der im Ventil verbauten Komponenten eingestellt werden kann. Da der Schraubstopfen bis zum Anschlag eingeschraubt wird, ergibt sich eine Fertigungstoleranzen ausgleichende, reproduzierbare Ausgangslage des Schraubstopfens. Während des Herausschraubens des Verschlussstopfens wird ein vom festgelegten Drehwinkel abhängiges, von Fertigungstoleranzen jedoch unabhängiges, Axialspiel von Antriebswelle und Regelscheibe eingestellt.

Die Erfindung wird nun anhand der beigefügten Figuren näher erläutert. Dabei zeigen
- Figur 1: eine schematische Ansicht eines Ventils 100;
- Figur 2: eine schematische Ansicht einer Regelscheibe;
- Figur 3: eine Detailansicht des Ventils und
- Figur 4: einen Schnitt durch einen Pressstopfen.

### Ausführungsformen der Erfindung

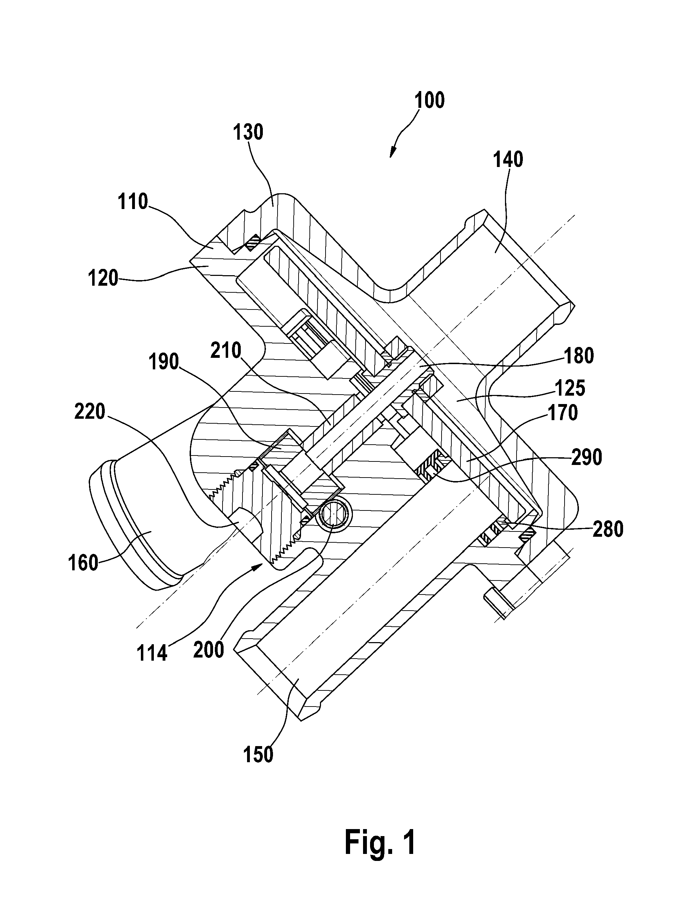

Figur 1 zeigt in schematischer Darstellung einen Schnitt durch ein Ventil 100. Das Ventil 100 kann zur Steuerung eines Durchflusses eines Mediums in einem Heiz- und/oder Kühlsystem eines Kraftfahrzeugs dienen. Das Medium ist zweckmässigerweise eine Flüssigkeit mit hoher Wärmekapazität, beispielsweise Wasser.

Das Ventil 100 umfasst ein Ventilgehäuse 110, das einen ersten Kanal 140, einen zweiten Kanal 150 und einen dritten Kanal 160 aufweist. Der erste Kanal 140, der zweite Kanal 150 und der dritte Kanal 160 dienen zum Anschluss von Leitungen des Heiz- und/oder Kühlsystems, in denen das Medium zirkuliert. Der erste Kanal 140 kann beispielsweise einen Zulauf darstellen. In diesem Fall stellen der zweite Kanal 150 und der dritte Kanal 160 Abläufe des Ventils 100 dar. Das Medium kann allerdings auch umgekehrt durch den zweiten Kanal 150 und durch den dritten Kanal 160 zu- und über den ersten Kanal 140 abfließen.

Das Ventilgehäuse 110 besteht aus einem Gehäuseoberteil 120, in dem der erste Kanal 140 angeordnet ist, und einem Gehäuseunterteil 130, das den zweiten Kanal 150 und den dritten Kanal 160 aufweist. Das Gehäuseoberteil 120 und das Gehäuseunterteil 130 sind dichtend miteinander verbunden. Das Gehäuseoberteil 120 und das Gehäuseunterteil 130 können beispielsweise miteinander verschraubt oder miteinander verklebt sein. Im Übergangsbereich zwischen dem Gehäuseoberteil 120 und dem Gehäuseunterteil 130 weist das Ventilgehäuse 110 eine Ventilkammer 125 mit einem etwa kreisförmigen Querschnitt auf. In dieser Ventilkammer 125 ist eine Regelscheibe 170 angeordnet, die einen ebenfalls kreisförmigen Querschnitt aufweist und dazu dient, eine Verbindung zwischen dem ersten Kanal 140 und dem zweiten Kanal 150 und dem dritten Kanal 160 zu öffnen und zu schließen.

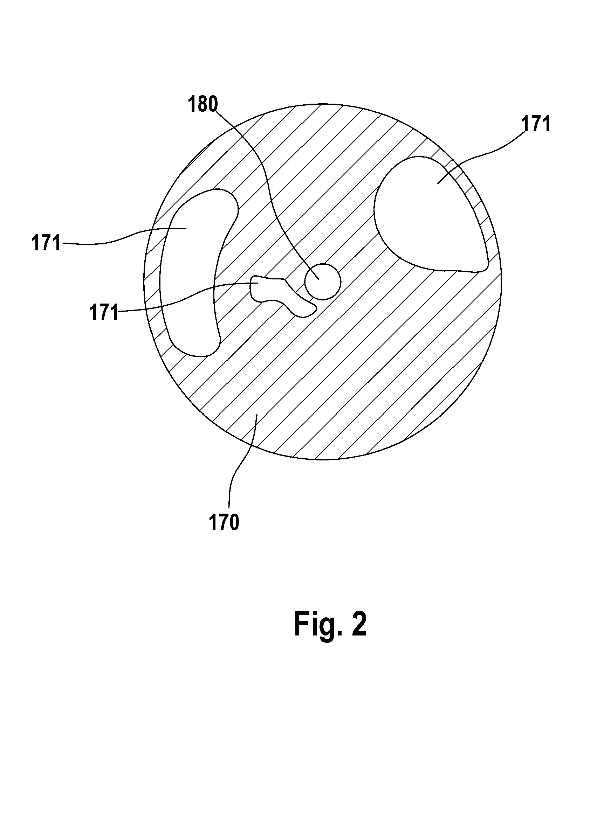

Figur 2 zeigt in schematischer Ansicht eine Aufsicht auf die Regelscheibe 170. Die Regelscheibe 170 weist eine Mehrzahl von Regelöffnungen 171 auf. Je nach axialem Drehwinkel der Regelscheibe 170 in der Ventilkammer 125 ist eine der Regelöffnungen 171 im Bereich zwischen dem ersten Kanal 140 und dem zweiten Kanal 150 bzw. dem ersten Kanal 140 und dem dritten Kanal 160 angeordnet. Durch Drehen der Regelscheibe 170 können also Verbindungen zwischen dem ersten Kanal 140 und dem zweiten Kanal 150 bzw. dem ersten Kanal 140 und dem dritten Kanal 160 geöffnet und geschlossen werden. Außerdem kann der jeweilige Öffnungsquerschnitt zwischen dem ersten Kanal 140 und dem zweiten Kanal 150 bzw. dem dritten Kanal 160 durch Drehen der Regelscheibe 170 in der Ventilkammer 125 variiert werden. Durch Verändern des Öffnungsquerschnitts kann der Durchfluss des Mediums gesteuert werden.

Der Übergangsbereich zwischen dem zweiten Kanal 150 und der Regelscheibe 170 ist mittels einer ringförmigen Dichtscheibe 280 abgedichtet, die im zweiten Kanal 150 angeordnet ist und durch einen, ebenfalls im zweiten Kanal 150 angeordneten, ringförmigen gefederten Dichtring 290 gegen die Regelscheibe 170 gedrückt wird. Die Dichtscheibe 280 weist regelscheibenseitig eine sehr glatte Oberfläche auf, wodurch eine gute Dichtung zwischen Dichtscheibe 280 und Regelscheibe 170 gewährleistet wird.

Auch der Übergangsbereich zwischen dem dritten Kanal 160 und der Regelscheibe 170 ist mittels einer Dichtscheibe, die durch einen gefederten Dichtring gegen die Regelscheibe 170 gedrückt wird, abgedichtet. Dies ist in Figur 1 nicht dargestellt.

Figur 1 zeigt außerdem, dass das Gehäuseoberteil 120 eine Axialöffnung 114 aufweist, die sich von der Ventilkammer 125 bis zu einer zwischen dem zweiten Kanal 150 und dem dritten Kanal 160 angeordneten Außenseite des Ventilgehäuses 110 erstreckt. In der Axialöffnung 114 ist eine zylindermantelförmige Lagerbuchse 210 angeordnet. Außerdem ist in der Axialöffnung 114 eine Antriebswelle 180 vorgesehen, die durch die Lagerbuchse 210 verläuft. Die Antriebswelle 180 weist eine im Wesentlichen zylindrische Form auf und ist um ihre Längsachse drehbar gelagert.

Das in der Ventilkammer 125 angeordnete Ende der Antriebswelle 180 durchstößt die Regelscheibe 170 in einem Zentrum der Regelscheibe 170 senkrecht und ist starr mit der Regelscheibe 170 verbunden. Eine Drehung der Antriebswelle 180 um die Längsachse der Antriebswelle 180 bewirkt also eine Drehung der Regelscheibe 170 um ihre Mittenachse.

Das von der Regelscheibe 170 abgewandte Ende der Antriebswelle 180 weist ein Stirnrad 190 auf. Das Stirnrad 190 steht mit einem im Ventilgehäuse 110 angeordneten Schneckenrad 200 in Eingriff, das mit einem Antriebsmechanismus, beispielsweise einem Motor verbunden ist. Über das Schneckenrad 200 und das Stirnrad 190 kann die Antriebswelle 180 in eine Drehung um ihre Längsachse versetzt werden.

Im Bereich zwischen der Antriebswelle 180 und der Außenseite des Ventilgehäuses 110 ist die Axialöffnung 114 durch einen Verschlussstopfen 220 verschlossen.

Falls die Verbindungen zwischen dem ersten Kanal 140 und dem zweiten Kanal 150 bzw. dem dritten Kanal 160 durch die Regelscheibe 170 verschlossen sind und das durch das Ventil 100 gesteuerte Medium im ersten Kanal 140 einen höheren Druck als im zweiten Kanal 150 und im dritten Kanal 160 aufweist, so wirkt auf die Regelscheibe 170 eine Kraft in Richtung des zweiten Kanals 150 und des dritten Kanals 160. Falls die Regelscheibe 170 und die Antriebswelle 180 mit Spiel in der Axialöffnung 114 angeordnet sind, der auf die Regelscheibe 170 wirkenden Kraft also nachgeben können, so bewirkt diese Kraft ein Verschieben der Regelscheibe 170 in Richtung des zweiten Kanals 150 und des dritten Kanals 160. Dadurch erhöht sich die zwischen der Regelscheibe 170 und der Dichtscheibe 280 wirkende Reibungskraft, wodurch sich die zur Drehung der Regelscheibe 170 notwendige Kraft erhöht. In der Folge muss der das Schneckenrad 200 antreibende Antriebsmechanismus eine höhere Leistung aufbringen. Außerdem erhöht sich der Verschleiß. Um dies zu vermeiden, erlaubt das Ventil 100 eine Einstellung des Spiels von Regelscheibe 170 und Antriebswelle 180 in der Axialöffnung 114 mittels des Verschlussstopfens 220.

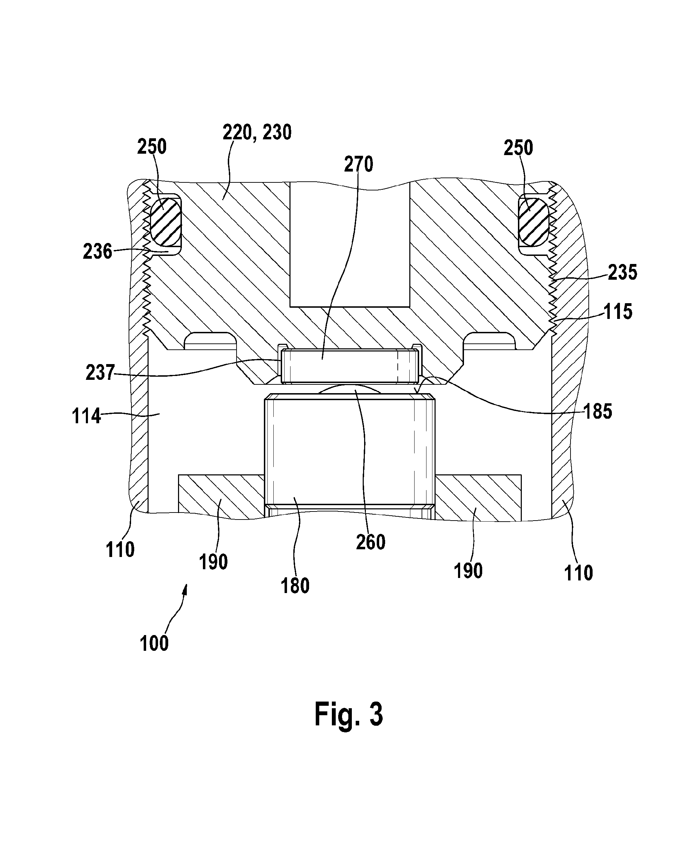

Figur 3 zeigt eine vergrößerte Ansicht eines Ausschnitts des Ventils 100. Zu sehen ist ein verschlussstopfenseitiges Ende der Antriebswelle 180 sowie der Verschlussstopfen 220. In der in Figur 3 dargestellten Ausführungsform ist der Verschlussstopfen 220 als Schraubstopfen 230 ausgebildet. Die Axialöffnung 114 des Ventilgehäuses 110 weist ein Innen-Gewinde 115 auf. Der Schraubstopfen 230 weist ein Außen-Gewinde 235 auf. Das Innen-Gewinde 115 und das Außen-Gewinde 235 können beispielsweise als Feingewinde ausgeführt sein. Der Schraubstopfen 230 ist in das Innengewinde 115 der Axialöffnung 114 eingeschraubt.

Der Schraubstopfen 230 weist außerdem eine umlaufende Nut 236 auf, in der ein Dichtring 250 angeordnet ist. Der Dichtring 250 dichtet die Axialöffnung 114 gegenüber der Umgebung des Ventils 100 ab. Der Dichtring 250 kann beispielsweise aus Kunststoff bestehen.

Eine der Antriebswelle 180 zugewandte Seite des Schraubstopfens 230 weist eine Vertiefung 237 auf. In der Vertiefung 237 ist eine Anlaufscheibe 270 angeordnet. Die Anlaufscheibe 270 hat den Zweck, die bei einer Drehung der Antriebswelle 180 um die Längsachse der Antriebswelle 180 auftretende Reibung zwischen der Antriebswelle 180 und dem Schraubstopfen 230 zu reduzieren. Die Vertiefung 237 und die Anlaufscheibe 270 können jedoch auch entfallen.

Eine dem Schraubstopfen 230 zugewandte Stirnseite 185 der Antriebswelle 180 weist eine kuppelförmige bzw. sphärische Anlaufkuppe 260 auf. Die Anlaufkuppe 260 hat ebenfalls den Zweck, die zwischen der Antriebswelle 180 und dem Schraubstopfen 230 auftretende Reibung zu reduzieren. Die Anlaufkuppe 260 kann jedoch ebenfalls entfallen. Alternativ kann eine kuppelförmige bzw. sphärische Anlaufkuppe auch auf der Anlaufscheibe 270, bzw. bei Fehlen der Anlaufscheibe 270 auf der der Antriebswelle 180 zugewandten Seite des Schraubstopfens 230 vorgesehen sein. Es können auch sowohl die Antriebswelle 180 als auch der Schraubstopfen 230 oder die Anlaufscheibe 270 eine kuppelförmige Anlaufkuppe aufweisen.

In der Darstellung der Figur 3 ist der Schraubstopfen 230 so weit in die Axialöffnung 114 eingeschraubt, dass die Anlaufscheibe 270 mit der Antriebswelle 180 in Kontakt steht. Der Schraubstopfen 230 kann jedoch auch weniger weit in die Axialöffnung 114 eingeschraubt werden, sodass sich zwischen dem Schraubstopfen 230 und der Antriebswelle 180 ein definierter Abstand einstellt, der der Antriebswelle 180 und der Regelscheibe 170 als definiertes Spiel zur Verfügung stellt. Zu diesem Zweck wird der Schraubstopfen 230 zunächst bis zum Anschlag des Schraubstopfens 230 an der Antriebswelle 180 in die Axialöffnung 114 eingeschraubt und anschließend um eine festgelegte Winkeldrehung wieder aus der Axialöffnung 114 herausgeschraubt. Die Winekldrehung wird so gewählt, dass sich das gewünschte Axialspiel einstellt.

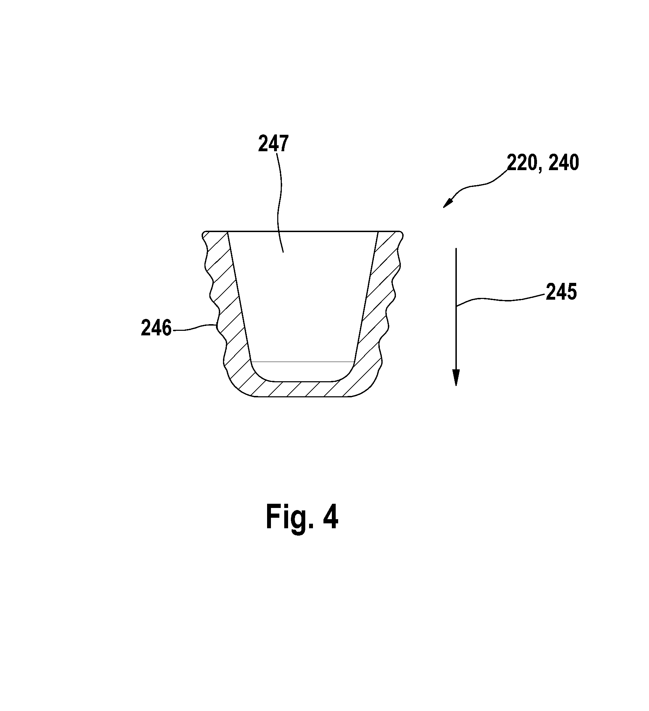

Anstatt des Schraubstopfens 230 kann als Verschlussstopfen 220 auch ein Pressstopfen 240 verwendet werden, wie er in Figur 4 in einer schematischen Schnittansicht dargestellt ist. Der Pressstopfen 240 weist eine ungefähr topfförmige Gestalt mit einem Hohlraum 247 zwischen einem offenen und einem geschlossenen Ende auf. Eine Außenseite des Pressstopfens 240 weist eine umlaufende Außenverzahnung 246 auf, die dafür sorgt, dass der Pressstopfen 240 festen Halt in der Axialöffnung findet. Dazu wird der Pressstopfen 240 in eine Einpressrichtung 245 in die Axialöffnung 114 eingepresst. Um das gewünschte Axialspiel der Antriebswelle 180 und der Regelscheibe 170 einzustellen, wird die axiale Lage der Antriebswelle 180 in der Axialöffnung 114 zunächst ausgemessen und der Pressstopfen 240 anschließend soweit wie gewünscht kontrolliert in die Axialöffnung 114 eingepresst. Bevorzugt weist die Axialöffnung 114 bei dieser Ausführungsform kein Innengewinde 115 auf.

## Patentansprüche

1. Ventil (100) zur Steuerung eines Durchflusses eines Mediums in einem Heiz- und/oder Kühlsystem eines Kraftfahrzeugs,
mit einem Ventilgehäuse (110), das mindestens einen ersten Kanal (140) und einen zweiten Kanal (150) aufweist,
einer an einer drehbar gelagerten Antriebswelle (180) angeordneten Regelscheibe (170),
wobei das Ventilgehäuse (110) eine Axialöffnung (114) aufweist und die Antriebswelle (180) in der Axialöffnung (114) angeordnet ist,
wobei die Regelscheibe (170) dazu vorgesehen ist, eine Verbindung zwischen dem ersten Kanal (140) und dem zweiten Kanal (150) zu öffnen und zu schließen,
**dadurch gekennzeichnet, dass**
in der Axialöffnung (114) ein Verschlussstopfen (220) angeordnet ist, der als Widerlager für eine Stirnseite (185) der Antriebswelle (180) dient.

2. Ventil (100) nach Anspruch 1,
wobei der Verschlussstopfen (220) als Schraubstopfen (230) ausgebildet ist und auf einer Außenseite ein Gewinde (235) aufweist.

3. Ventil (100) nach Anspruch 2,
wobei der Verschlussstopfen (220) auf einer Außenseite eine umlaufende Nut (236) aufweist,
wobei in der Nut (236) ein Dichtring (250) angeordnet ist.

4. Ventil (100) nach einem der Ansprüche 2 oder 3,
wobei der Verschlussstopfen (220) im Ventilgehäuse (110) gegen ein Verdrehen gesichert ist.

5. Ventil (100) nach Anspruch 1,
wobei der Verschlussstopfen (220) als Pressstopfen (240) ausgebildet ist.

6. Ventil (100) nach einem der vorhergehenden Ansprüche,
wobei der Verschlussstopfen (220) eine stirnseitige Vertiefung (237) aufweist,
wobei in der Vertiefung (237) eine Anlaufscheibe (270) angeordnet ist.

7. Ventil (100) nach Anspruch 6,
wobei eine der Antriebswelle (180) zugewandte Oberfläche der Anlaufscheibe (270) eine kuppelförmige Anlaufkuppe (260) aufweist.

8. Ventil (100) nach einem der vorhergehenden Ansprüche,
wobei die dem Verschlussstopfen (220) zugewandte Stirnseite (185) der Antriebswelle (180) eine kuppelförmige Anlaufkuppe aufweist.

9. Ventil (100) nach einem der vorhergehenden Ansprüche,
wobei in der Axialöffnung (114) eine Lagerbuchse (210) angeordnet ist, wobei die Antriebswelle (180) durch die Lagerbuchse (210) geführt ist.

10. Verfahren zum Montieren eines Ventils (100) zum Steuern eines Durchflusses eines Mediums in einem Heiz- und/oder Kühlsystem eines Kraftfahrzeugs,
wobei das Ventil (100) ein Ventilgehäuse (110), das mindestens einen ersten Kanal (140) und einen zweiten Kanal (150) aufweist,
und eine an einer drehbar gelagerten Antriebswelle (180) angeordnete Regelscheibe (170) umfasst,
wobei das Ventilgehäuse (110) eine Axialöffnung (114) aufweist und die Antriebswelle (180) in der Axialöffnung (114) angeordnet ist,
wobei die Regelscheibe (170) dazu vorgesehen ist, eine Verbindung zwischen dem ersten Kanal (140) und dem zweiten Kanal (150) zu öffnen und zu schließen,
wobei das Verfahren die folgenden Schritte umfasst:
- Einschrauben eines als Schraubstopfen (230) ausgebildeten Verschlussstopfens (220) in die Axialöffnung (114) bis zu einem Anschlag des Verschlussstopfens (220) an der Antriebswelle (180);
- Herausschrauben des Verschlussstopfens (220) aus der Axialöffnung (114) um einen festgelegten Drehwinkel.
